# EUROPEAN PATENT APPLICATION

(11) **EP 1 752 990 A1**
(43) Date of publication of application: **14.02.2007**
(21) Application number: 06254075.2
(22) Date of filing: 03.08.2006
(51) Int. Cl.: G21C 3/356

(54) **A fuel spacer for a nuclear fuel bundle**

(30) Priority: 08.08.2005 US 198300
(71) Applicant: Global Nuclear Fuel-Americas, LLC, Wilmington, North Carolina 28401 (US); Global Nuclear Fuel-Japan Co., Ltd., Kanagawa-ken 239-0839 (JP)
(72) Inventor: Makovika, Mason, Wilmington, NC 28412 (US); Hayakawa, Hiroaki, Yokohama-shi, Kanagawa-ken 247-0006 (JP); Elkins, Robert, Wilmington, NC 28411 (US); Tanabe, Akira, Yokohama-shi, Kanagawa-ken 236-0038 (JP)
(74) Representative: Bedford, Grant Richard

(57) **Abstract**

A spacer (18) for a nuclear fuel assembly includes dividers (50, 52, 54, 56, 58, 60, 62, 64) orthogonally interdigitated relative to one another defining fuel and water rod cells (22). The dividers defining fuel rod cells have openings (70) carrying an integrally formed spring (28) which projects into the fuel cell to bear the fuel rod in the cell against an opposite stop (32) carried by an opposing divider. The dividers are arranged in a 10x10 array with diagonally opposing quadrants being mirror images of one another. The dividers are surrounded by a peripheral band (24) with integrally formed stops (34) projecting into the peripheral cells enclosing the spacer.

## Description

The present invention relates to a spacer for a nuclear fuel bundle assembly and particularly relates to a nuclear fuel bundle spacer having a limited number of piece parts and a low pressure drop and enabling high critical power.

Spacers in nuclear fuel bundle assemblies comprise structural elements located at axially spaced positions along the length of the fuel bundle to maintain fuel rod-to-rod spacing in normal operation and to accommodate shipping and handling movements of the bundles. The spacer also impacts thermal hydraulic performance of the fuel bundle and is designed to enable the bundle to achieve critical power objectives without substantial pressure drop.

Nuclear fuel spacers are typically formed of a multiplicity of different parts which, upon assembly, define cell openings for receiving fuel rods as well as water rods. Spacer designs conventionally provide one or more springs in each round, square or octagonal fuel rod cell to positively locate the fuel rods in the center of the cell against stops that comprise separate elements or are incorporated into the cell defining the structures and bands surrounding the assembly. The production and assembly of these various and many parts is complicated, laborious and costly. Moreover, the assembled spacer affects thermal hydraulic performance in terms of critical power and pressure drop. Particularly, current spacer designs use separate springs captured and positioned by other parts of the spacer, making them susceptible to flow induced vibrations, the possibility of loose parts and rendering it difficult to control the spring characteristics such as stiffness and to reduce stresses.

In accordance with a preferred aspect of the present invention, there is provided a nuclear fuel spacer formed of a plurality of dividers with integrated springs with the dividers being interdigitated one with the other to form a grid structure within an outer band. The dividers have common elements, and the number of discrete divider parts is maintained at a minimum, particularly by providing back-to-back dividers secured to one another along orthogonally related centerlines of the spacer, enabling quadrants of the spacer to be mirror images of orthogonally related quadrants. By using back-to-back centerline dividers, the divider springs of adjacent quadrants face in opposite directions and always face toward the peripheral band, avoiding placement of springs in the outer peripheral band. The springs per se also are formed integrally with the dividers to minimize the number of parts, simplify assembly, precisely position the springs and minimize the possibility of loose parts. The outer band is moved outward by over sizing the integrated stops and under sizing the bathtubs creating rectangular fuel rod cells on the periphery of the spacer with the fuel rod cells on the periphery of the spacer with the fuel rods not residing in the center of the cell. This allows the band to reside in a lower coolant velocity and thus lower pressure drop regime. It also provides for more coolant flow inside the band in conjunction with more room for over sized flow tabs on the band to direct more coolant back onto the edge fuel rods to improve critical power. Other features of the present invention will become apparent from the ensuing description.

In a preferred embodiment according to the present invention, there is provided a spacer for a nuclear fuel bundle comprising an outer peripheral band, a plurality of orthogonally arranged interdigitated dividers within the band and defining with the band a grid having an array of cells for receiving fuel rods, each cell having orthogonally related sides, each divider including along a side of the cells a plurality of openings and at least one spring spanning the openings, the springs projecting out of a plane generally containing the divider and to one side of the divider into the cell and formed integrally with the divider, each spring having an intermediate portion for engaging a fuel rod, legs extending from opposite sides of the intermediate portion toward respective top and bottom edges of the spacer and pairs of laterally projecting flanges interconnecting opposite end portions of the legs and lateral margins of the divider defining the openings, the flanges adjacent the top and bottom edges of the spacer being angled from the leg end portions in directions toward the bottom and top edges, respectively, of the spacer.

In a further preferred embodiment according to the present invention, there is provided a spacer for a nuclear bundle comprising an outer rectilinear peripheral band, a plurality of orthogonally arranged interdigitated dividers within the band and defining with the band a grid having an array of cells for receiving fuel rods, each cell having orthogonally related sides, each divider including along a side of the cells a plurality of openings and at least one spring spanning each opening, the springs projecting out of a plane generally containing the divider and to one side of the divider into the cell and formed integrally with the divider, a first set of the plurality of dividers extending orthogonally relative to one another for the full length and width of the spacer between opposite sides of the band, a second set of the plurality of dividers extending along orthogonally related centerlines of the spacer, pairs of discrete dividers of the second set thereof being secured to one another back-to-back and forming the dividers along the respective centerlines of the spacer, the springs of the discrete dividers of each back-to-back pair of dividers extending back-to-back to one another and in opposite directions toward opposite sides of the band.

Various aspects and embodiments of the present invention will now be described in conjuntion with the accompanying drawings in which:
FIGURE 1 is a partial fragmentary schematic representation of a nuclear fuel bundle assembly illustrating a pair of spacers with fuel rods extending into the spacers;
FIGURE 2 is a top plan view of a spacer according to an aspect of the present invention;
FIGURE 3 is a side elevational view of the spacer of Figure 2;
FIGURE 4 is a top elevational view of one of four peripheral spacer bands;
FIGURE 5 is a side elevational view of a regular divider forming part of the grid within the spacer band;
FIGURES 5a and 5b are top and end elevational views of the regular divider of Figure 5;
FIGURE 5c is a side elevational view of a portion of a divider defining a single cell;
FIGURE 6 is a view similar to Figure 5 illustrating an identical regular divider with oppositely directed slots affording interdigitation;
FIGURES 7, 8, 9 and 10 are side elevational views of partial dividers for accommodating water rod openings within the spacer;
FIGURE 11 is a side elevational view of a center divider;
FIGURE 12 is a top plan view of end-to-end back-to-back dividers of Figure 11 forming a centerline divider assembly;
FIGURE 13 is a side elevational view of the dividers of Figure 11 arranged back-to-back;
FIGURE 14 is a side elevational view of another center divider;
FIGURE 15 is a top plan view of a pair of the dividers of Figure 14 arranged end-to-end back-to-back;
FIGURE 16 is a side elevational view of the dividers of Figure 14 arranged back-to-back;
FIGURE 17 is a side elevational view of a special divider;
FIGURE 18 is a top plan view thereof;
FIGURE 19 is a side elevational view of another special divider; and
FIGURE 20 is a top plan view thereof.

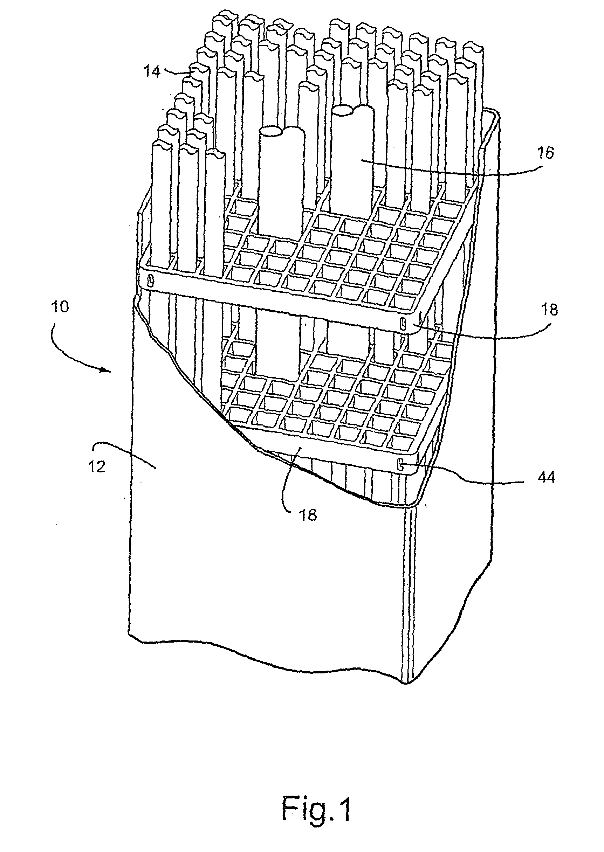

Referring now to the drawings, particularly to Figure 1, there is illustrated a fuel bundle assembly generally designated 10 comprised of a fuel bundle channel 12 surrounding a plurality of fuel rods 14 and water rods 16 arranged in a generally rectilinear grid configuration. Spacers 18 are axially spaced one from the other as illustrated and maintain the fuel rods and water rods spaced one from the other in the grid configuration.

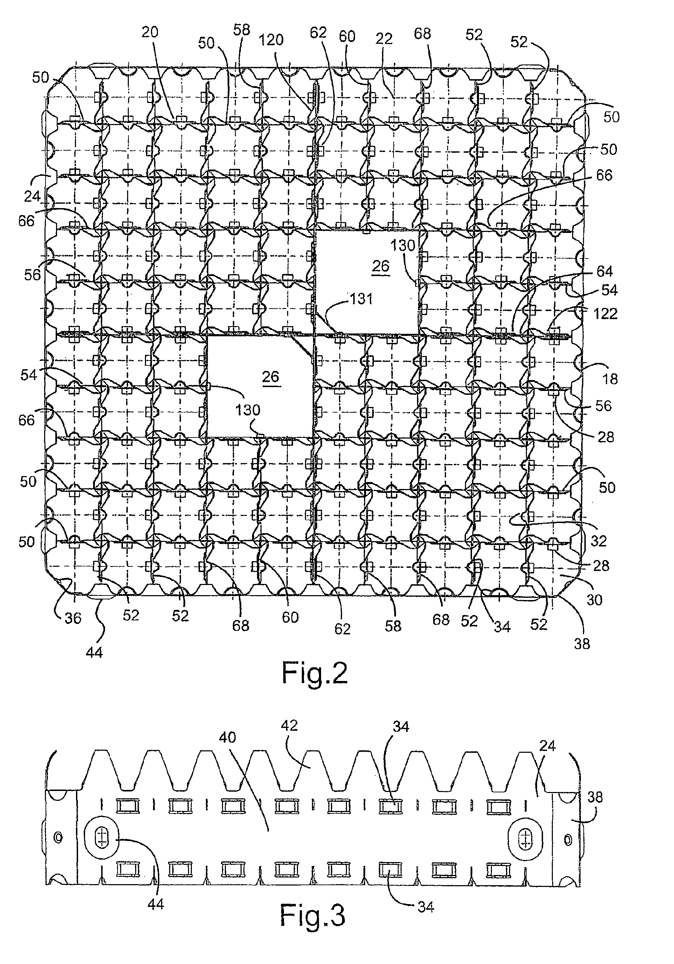

Referring to Figure 2, the spacer 18 is illustrated in a top plan view. As illustrated, the spacer comprises a grid structure defined by orthogonally related dividers 20 interdigitated with one another to form a grid. In this preferred embodiment, it will be appreciated that a 10x10 array of cells 22 are formed by the interdigitated dividers 20 bounded by the peripheral band 24. The grid structure defined by the dividers and peripheral band also affords larger openings 26. The cells 22 and openings 26 receive the fuel and water rods, respectively. Two water rod openings 26 are illustrated, each occupying space in the grid structure which would otherwise constitute four fuel cell openings 22. By interdigitation, it is meant the dividers 20 have respective slots opening through top and bottom edges of the dividers so that orthogonally related dividers may be received in the slots of one another.

As illustrated in Figure 2, the dividers 20 are elongated in length and width directions of the spacer and extend between top and bottom faces of the spacer. The dividers 20 also include in each fuel cell a spring 28 which projects inwardly of the cell. The orthogonally related dividers 20 defining each fuel cell 22 have two orthogonally related springs 28. With the exception of the corner fuel cells 30, each fuel cell is provided with two orthogonally related stops 32 provided on orthogonally related dividers. Oversized stops 34 are provided adjacent top and bottom faces of the spacer and on the outer peripheral band 24 in conjunction with undersized bathtubs 44 to permit rectangular shaped peripheral cells. The corner fuel cells 30 have springs 28 provided by orthogonally related dividers and a single stop 36 formed in a diagonally related corner piece 38 forming an integral part of the outer band 24. Consequently, with the exception of the corner cells 30, each cell 22 includes orthogonally related intermediate springs 28 which lie opposite stops 32 of orthogonally related dividers or stops of one divider and the stop 34 of the band for the marginal fuel cell openings 22.

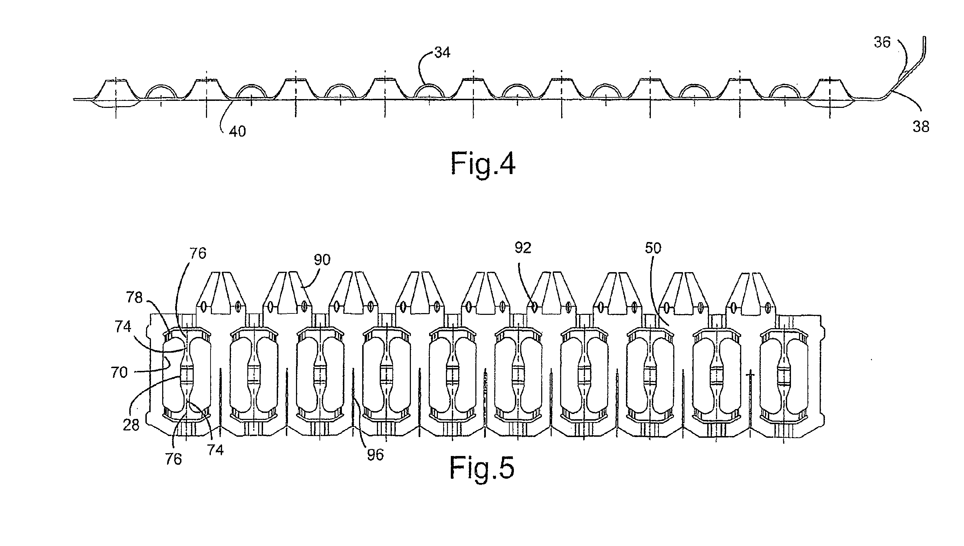

Referring to Figures 3 and 4, the outer peripheral band of the spacer is comprised of four identical parts, each part 40 as illustrated in Figure 4 spans the width of the spacer and includes a corner piece 38. Additionally, the oversized stops 34, illustrated in Figure 3, lie adjacent the top and bottom edges of the bands. In conjunction with the oversized stops, the undersized bathtubs 44 move the band outward creating rectangular cells on the spacer periphery allowing more flow inside the band and space for oversized inwardly directed flow deflecting tabs 42 for directing flow of coolant within the band onto the fuel rods. The outwardly directed projecting bathtubs 44 engage the interior wall surfaces of the channel 12. In assembly, the band portions 40 are seam welded one to the other about the periphery of the spacer.

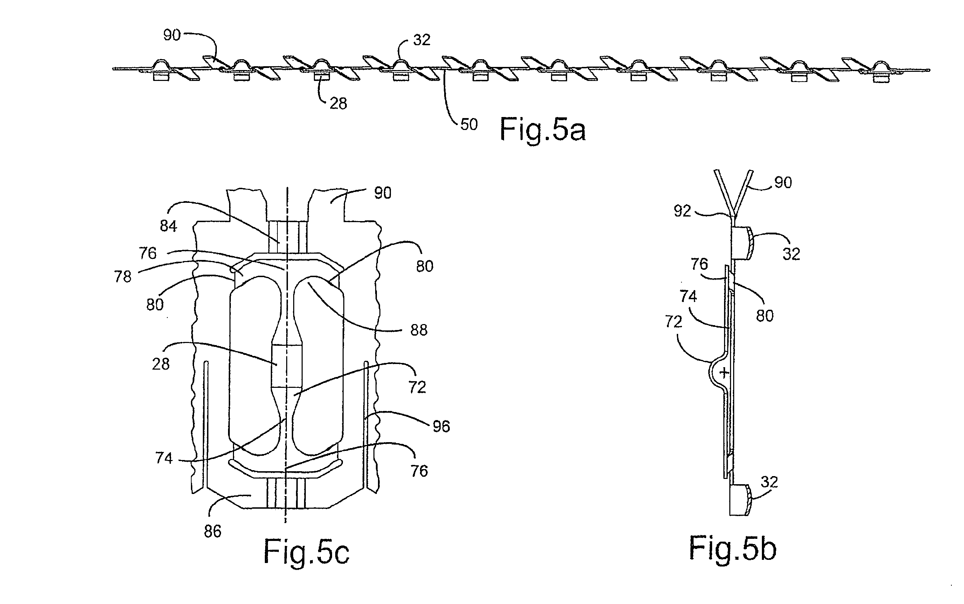

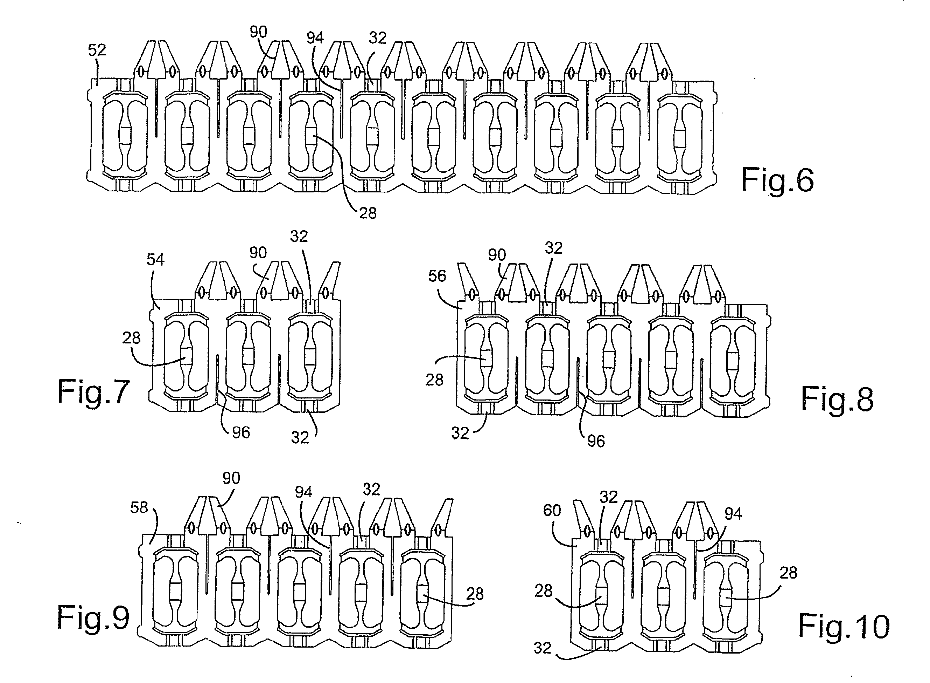

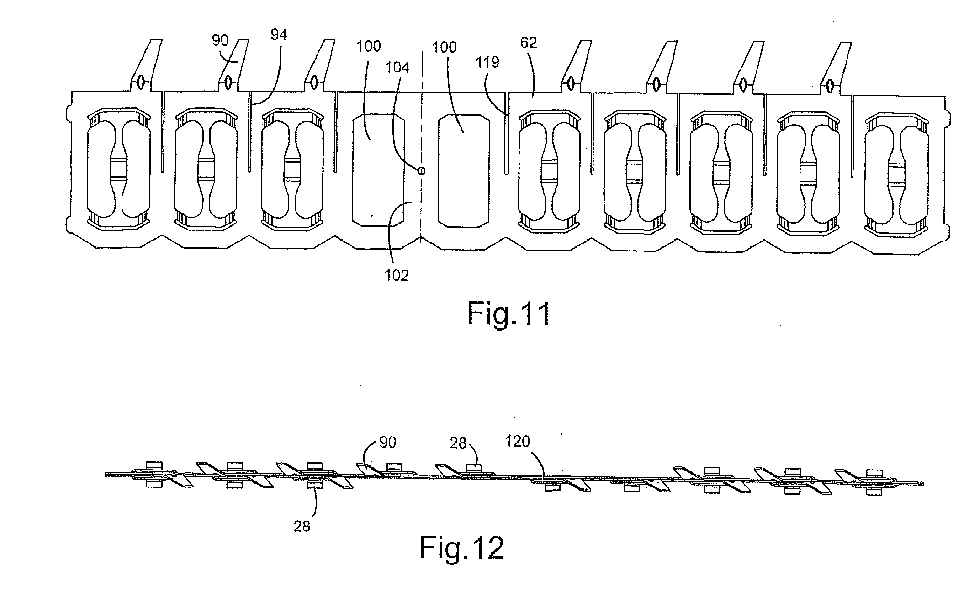

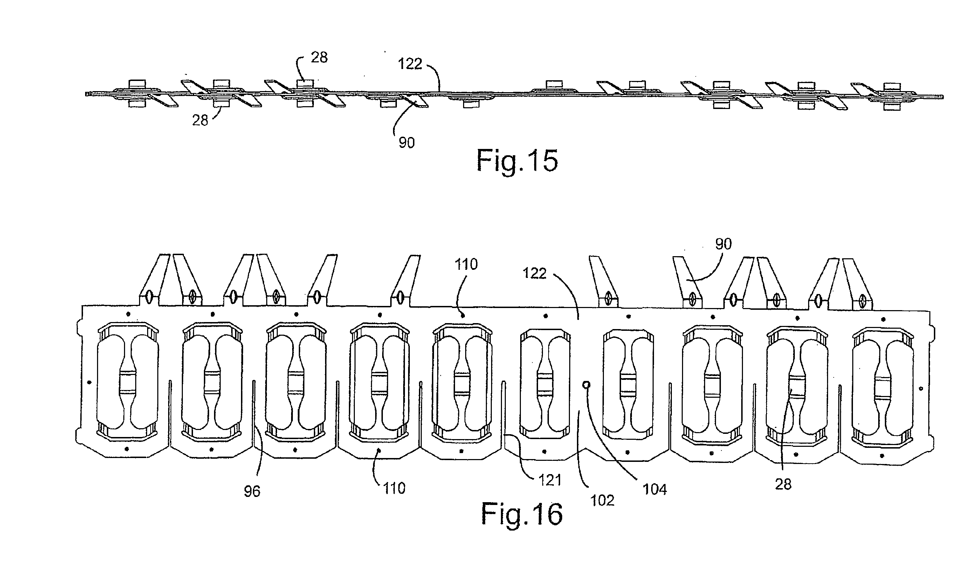

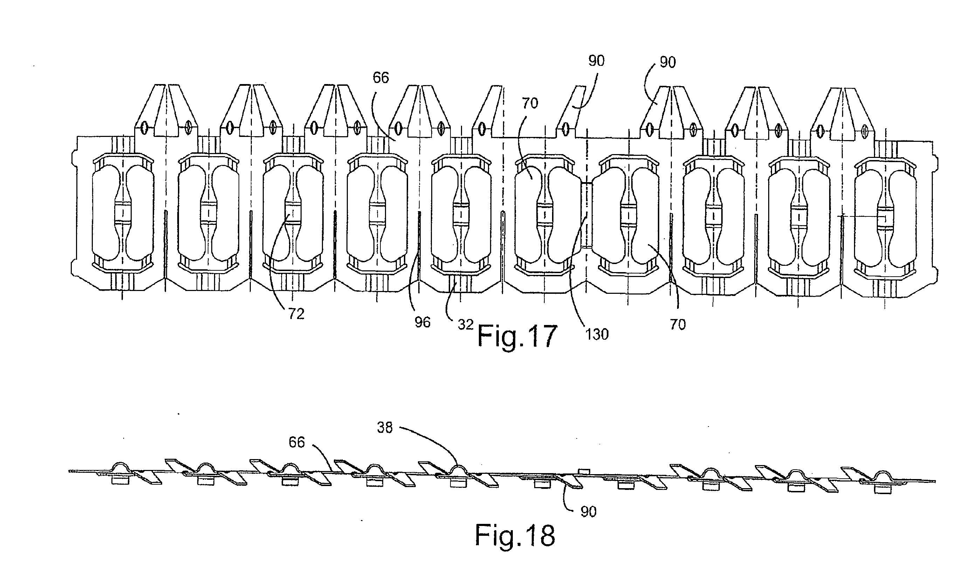

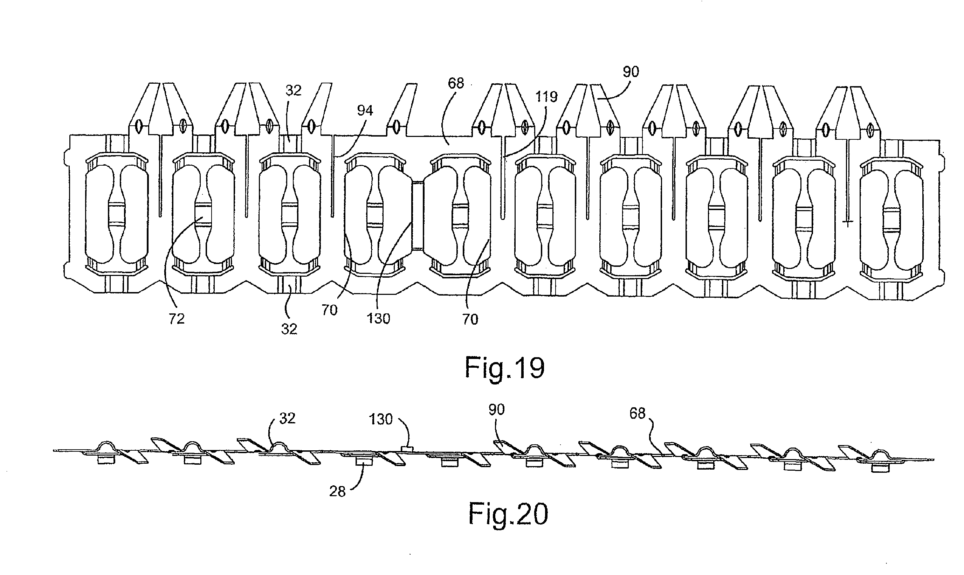

Dividers 20 are formed of sets of regular dividers 50, 52, partial dividers 54, 56, 58 and 60, center dividers 62 (Figures 11-13) and 64 (Figures 14-16) and special dividers 66 (Figures 17 and 18) and 68 (Figures 19 and 20). Each of the sets of dividers has a plurality of openings 70 containing the springs 28 and a description of one spring 28 and its interconnection with a divider, for example, either of the dividers 50 or 52 of Figures 5 and 6, respectively, will suffice as a description of the springs 28 for the remaining sets of dividers.

Referring to Figures 5 and 6, each divider includes a plurality of openings 70 spaced one from the other along the length of the divider, each opening 70 containing a spring 28. As best illustrated in Figure 5b, each spring 28 projects outwardly to one side of the divider 50 and includes an intermediate or central projection 72 having legs 74 extending therefrom in opposite directions terminating in generally T-shaped ends 76. The T-shaped ends 76 integrally include flanges 78 and angled elements 80 connecting the T-shaped portions 76 and margins of the openings 70. The T-shaped portions 76 including flanges 78 lie spaced from and generally parallel to the plane containing the divider with the elements 80 extending between the flanges 78 and the divider.

As best illustrated in Figures 5b and 5c, the flanges 78 and elements 80 interconnected with the flanges 78 and which are directed or angled inwardly relative to the opening 70 and toward the central spring 28. That is, the elements 80 together with the flanges 78 form generally flattened shallow arrowheads at opposite ends of the spring 28 pointing in opposite directions away from one another. It will be appreciated from a review of Figure 5c that the T-shaped portions 76 and flanges 78 are spaced from the margins 84 and 86 of the spacer adjacent the respective top and bottom edges of the divider. Consequently, the flanges 78 and elements 80 form the sole connection between the springs 28 and the dividers. It will be appreciated that by making the T-shaped portions 76 and flanges 78 inclined toward the spring, the effective length of the spring 28 is increased and the stiffness of the spring is reduced. Note also the large radii 88 between the legs 74 of the spring 28 and the T-shaped portions 76 which accommodate the substantial stresses at those locations.

As illustrated in Figure 5a, flow directing tabs 90 extend at angles from the upper edge of the regular divider 50. The tabs 90 alternately project to opposite sides of the divider. The tabs are bent or struck and reinforcing stiffeners 92 (Figure 5) are struck and projected to opposite sides of the tabs to reinforce the tabs and minimize or preclude deflection of the tabs in response to water pressure.

Referring to Figure 6, the regular divider 52 is identical to the divider 50 except that slots 94 open through the top edge of divider 52 while slots 96 open through the bottom edge of divider 50 to redirect coolant back onto the fuel rods. It will be appreciated that by arranging the dividers 50 and 52 orthogonally one to the other, each divider may be received in the slots of the other divider to form a grid type structure.

Referring now to Figures 7-10, partial dividers 54, 56, 58 and 60 are illustrated and have corresponding structure to portions of the regular dividers 50 and 52 previously described. The spring and stops previously described with respect to Figures 5 and 6 are applicable to the partial dividers of Figures 7-10. The difference between the partial dividers 54 and 60 resides in the slots 94 and 96 disposed through the top and bottom edges of the spacer such that the partial dividers 54 and 60 can be interdigitated with regular dividers 52 and 50, respectively. Similarly, the partial dividers 56 and 58 are identical to one another except for the slots 96 and 94 opening through the bottom and top edges of the dividers which permit interdigitation of the dividers 56, 58 with the regular dividers 50, 52 and special dividers 66, 68 to be described.

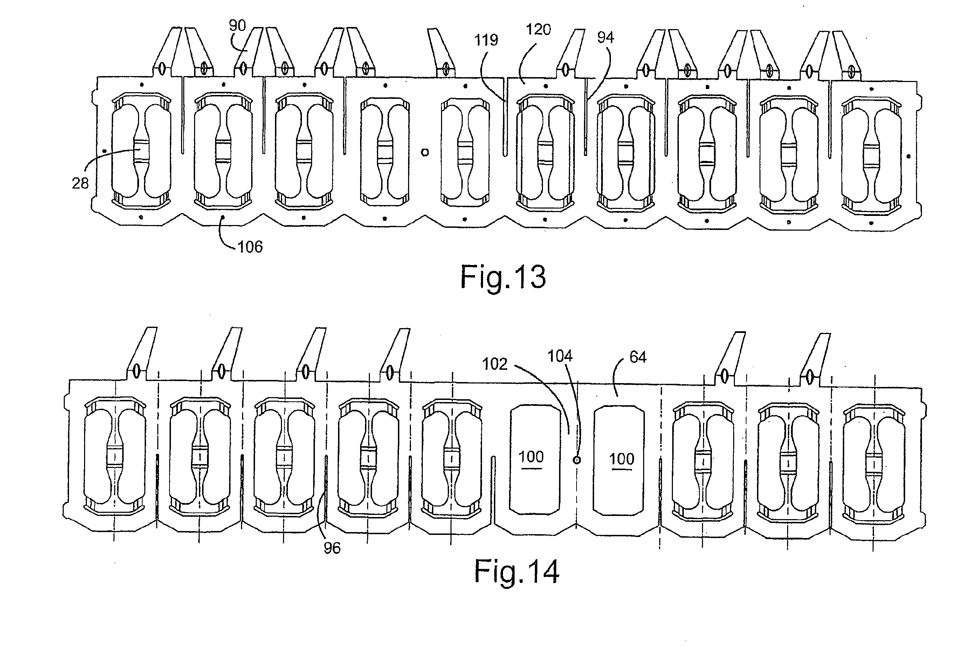

Referring now to Figures 11-13, there are illustrated center dividers 62. The center dividers 62 and 64 are provided to accommodate the water rod openings in the grid structure and to avoid spring assemblies in the peripheral band of the spacer. The springs 28 of center dividers 62 and 64 are identical to the springs 28 previously described with respect to the regular dividers 50, 52. However, springs 28 are omitted in a pair of adjacent openings 100 (Figure 11) of center divider 62. Additionally, a strut 102 of divider 62 lies between the adjacent openings 100 and includes a stop 104 projecting to one side of the divider. Two center dividers 62 are arranged in end-to-end back-to-back relation and are welded to one another, for example, by top and bottom spot welds indicated 106 in Figure 13 to form one of the two center dividers of the spacer.

Two center dividers 64 of Figures 14-16 are provided identical to one another and similarly have adjacent opening 100 separated by a strut 102 mounting a stop 104. The two center dividers 64 are arranged end-to-end and back-to-back and welded to one another, for example, by top and bottom spot welding indicated 110 in Figure 16. Thus, the center dividers 62 may form a center divider assembly 120 (Figures 12 and 13) while the center dividers 64 welded back-to-back form a center divider assembly 122 (Figures 16 and 17). It will be appreciated that the slots 119 and 121 of assemblies 120 and 122, respectively, may be interdigitated by the center dividers, and slots 94 and 96 may be interdigitated by the regular dividers 50 and 52. It will also be appreciated that by disposing the center dividers 62 back-to-back to one another and dividers 64 back-to-back to one another, the springs 28 of each center divider assembly project in opposite directions except in those areas which in part bound or define the water rod openings 26.

Referring now to Figures 17-20, there are illustrated special dividers 66 and 68. The springs 28 and flow tabs 90 of these special dividers are similar to the regular dividers. The deflector tabs 90 alternate to opposite sides of the divider. Referring to divider 66, the two openings 70 which will lie adjacent a water rod opening 26 have a bridging strut 130 which forms a spring projecting into the water rod opening 26. The deflecting tabs 90 adjacent those openings deflect to the opposite side of the divider from the spring projection, as can be seen in Figure 2. Note also that stops 32 are omitted with respect to the openings adjacent the water rod openings. The special divider 68 is similarly configured with a water rod spring 130 projecting to a side of the divider 68 opposite from which the springs 28 project. The slots 96 and 94 for the special dividers 66 and 68, respectively, lie adjacent the respective bottom and top edges of the spacer as illustrated to facilitate interdigitation.

Consequently, it will be appreciated that only a limited number of generally corresponding parts are required. For example, four each of the regular dividers 50 and 52 are provided. Two each of the partial dividers 54, 56, 58 and 60 are provided. Two each of the center dividers 62 and 64 are provided, and two each of the special dividers 66 and 68 are provided. Ancillary parts include only corner plates 131 (Figure 2) for the water rod openings. Consequently, a total of 24 divider parts are necessary to form the grid structure together with four peripheral bands 4 and two corner plates 131.

For illustrative and representative purposes, the regular dividers 52, the partial dividers 58 and 60, the center dividers 62 and the special dividers 68 are illustrated in Figure 2 as extending in a vertical direction. Those dividers have slots 94 opening in an upward direction. In addition, center dividers 62 and special dividers 68 have slots 119 opening in an upward direction. The regular dividers 50, partial dividers 54 and 56, center dividers 64 and special dividers 66 extend in a horizontal direction in Figure 2 and have slots 96 opening in a downward direction. In addition, center dividers 64 and special dividers 66 have slots 121 opening in a downward direction. Consequently, the slots 94 and 96 of the illustrated vertically and horizontally extending dividers enable orthogonal interdigitation of the dividers to form the rectilinear grid structure.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

### PARTS LIST

| Ref. Nos. | Description |
|---|---|
| 10 | Fuel bundle assembly |
| 12 | Fuel bundle channel |
| 14 | Fuel rods |
| 16 | Water rods |
| 18 | Spacer |
| 20 | Dividers |
| 22 | Cells (cell openings) |
| 24 | Peripheral band |
| 26 | Openings |
| 28 | Spring |
| 30 | Corner fuel cells |
| 32 | Stop(s) |
| 34 | Oversized stops |
| 36 | Single stop(s) |
| 38 | Corner piece |
| 40 | Part (band portion) |
| 42 | Flow deflecting tabs |
| 44 | Bathtubs |
| 50, 52 | Regular dividers |
| 54, 56, 58 and 60 | Partial dividers |
| 62, 64 | Center dividers |
| 66, 68 | Special dividers |
| 70 | (divider) openings |
| 72 | Projection |
| 74 | Legs |
| 76 | T-shaped ends |
| 78 | Flanges |
| 80 | Elements |
| 84, 86 | Margins |
| 88 | Radii |
| 90 | tabs |
| 92 | Stiffeners |
| 94, 96 | Slots |
| 100 | Adjacent openings |
| 102 | Strut |
| 104 | Stop |
| 106, 110 | spot welds |
| 119, 121 | Slots |
| 120 | Center divider assembly |
| 122 | Center divider assembly |
| 130 | Bridging strut / Rod spring |
| 131 | Corner plates |

## Claims

1. A spacer (18) for a nuclear fuel bundle comprising:
an outer peripheral band (24);
a plurality of orthogonally arranged interdigitated dividers (20) within said band and defining with said band a grid having an array of cells (22) for receiving fuel rods 14, each cell having orthogonally related sides;
each said divider including along a side of said cells a plurality of openings (70) and at least one spring (28) spanning said openings, said springs projecting out of a plane generally containing said divider and to one side of said divider into said cell and formed integrally with said divider;
each said spring having an intermediate portion (72) for engaging a fuel rod, legs (74) extending from opposite sides of said intermediate portion toward respective top and bottom edges of the spacer and pairs of laterally projecting flanges (78) interconnecting opposite end portions of said legs and lateral margins of said divider defining said openings.

2. A spacer according to claim 1 wherein each said intermediate spring portion of said springs includes a generally central projection, said legs (74) extending from said central projection toward the top and bottom edges of said spacer and having a width less than the width of said central projection.

3. A spacer according to claim 1 or claim 2 wherein said flanges (78) of said springs form the sole integral interconnection with the margins of the divider openings (70) defining said cells.

4. A spacer according to any preceding claim wherein said flanges adjacent the top and bottom edges of the spacer being angled from said leg end portions in directions toward said bottom and top edges, respectively, of the spacer.

5. A spacer according to any preceding claim wherein each said intermediate spring (72) portion of said springs includes a generally central projection, said legs (74) extending from said central projection toward the top and bottom edges of said spacer and having a width less than the width of said central projection, said flanges (78) of said springs forming the sole integral interconnection with the margins of the divider openings defining said cells, said flanges and said legs at their interconnections having radii in excess of 90° along inside margins of the flanges and outside margins of the legs.

6. A spacer according to any preceding claim wherein certain of said dividers have at least one integrated stop (32), each said stop projecting out of plane generally containing said certain divider into said cell in a direction opposite said spring.

7. A spacer according to any preceding claim wherein said band is void of springs and include integral stops (34), said stops projecting out of plane generally containing said band into peripheral cells of said spacer.

8. A spacer according to claim 7 wherein said fuel rod cells on the periphery of the spacer are rectangular, said stops (34) on said band projecting inwardly of peripheral cells a distance greater than said springs (28) of said peripheral cells opposite said stops on said band enabling the fuel rods to lie off-center in the peripheral cells.

9. A spacer according to any preceding claim wherein said dividers include stops (32) projecting to an opposite side of the dividers, said stops lying along top and bottom margins of the divider adjacent opposite ends of the openings.

10. A spacer according to any preceding claim wherein each said divider has flow deflecting tabs (90) projecting from a top edge thereof to one side of the divider and a strut (92) adjacent the juncture of each tab and the divider to reinforce the tab and minimize or prevent deflection of the tab in response to water flow through the spacer.
